# EUROPÄISCHE PATENTSCHRIFT

(11) **EP 3 392 081 B1**
(45) Veröffentlichungstag und Bekanntmachung des Hinweises auf die Patenterteilung: **27.05.2020**
(21) Anmeldenummer: 18159543.0
(22) Anmeldetag: 01.03.2018
(51) Int. Cl.: B60N 2/68, B60N 2/02

(54) **VERSTELLANORDNUNG FÜR EINE VERSTELLEINRICHTUNG EINES FAHRZEUGSITZES SOWIE EIN VERFAHREN ZUM HERSTELLEN EINER DERARTIGEN VERSTELLANORDNUNG**
ADJUSTING ASSEMBLY FOR AN ADJUSTING DEVICE OF A VEHICLE SEAT AND A METHOD FOR PRODUCING SUCH AN ADJUSTING DEVICE
AGENCEMENT DE RÉGLAGE POUR UN DISPOSITIF DE RÉGLAGE D'UN SIÈGE DE VÉHICULE AINSI QU'UN PROCÉDÉ DE FABRICATION D'UN TEL DISPOSITIF DE RÉGLAGE

(30) Priorität: 18.04.2017 DE 102017108206
(43) Veröffentlichungstag der Anmeldung: 24.10.2018
(73) Patentinhaber: Faurecia Autositze GmbH, 31655 Stadthagen (DE)
(72) Erfinder: Sulaiman, Hosen, 44227 Dortmund (DE); Völlmecke, Jörg, 32457 Porta Westfalica (DE); Schenke, Markus, 32469 Petershagen (DE); Schaper, Michael, 32469 Petershagen (DE); Witt, Jens, 31688 Nienstädt (DE)
(74) Vertreter: Bremer, Ulrich

(56) Entgegenhaltungen:
- EP-A1- 0 143 062
- DE-A1-102013 009 847

## Beschreibung

Die Erfindung betrifft eine Verstellanordnung für eine Verstelleinrichtung eines Fahrzeugsitzes sowie ein Verfahren zum Herstellen einer derartigen Verstellanordnung.

Verstelleinrichtungen für Fahrzeugsitze, beispielsweise Neigungsverstelleinrichtungen einer Rückenlehne oder Höhenverstelleinrichtungen für den gesamten Fahrzeugsitz, weisen herkömmlicherweise an Rahmenstrukturen gelagerte Querrohre auf, die verdrehfest mit Verbindungsteilen, beispielsweise Lenkern, Flanschen oder Beschlägen verbunden sind. Über die Verbindungsteile kann eine Drehbewegung oder eine Schwenkbewegung auf das Querrohr übertragen werden und/oder das Querrohr überträgt eine Drehbewegung auf die Verbindungsteile, um wiederum über die Verbindungsteile einen bestimmten Verstellmechanismus mittelbar oder unmittelbar betätigen zu können. Dabei ist beispielsweise auf beiden Seiten des Querrohres ein derartiges Verbindungsteil verdrehfest angeordnet, um eine Schwenkbewegung beidseitig auf den entsprechenden Verstellmechanismus am Fahrzeugsitz bzw. an der jeweiligen Fahrzeugsitz-Komponente übertragen zu können und somit für eine optimierte Verstellung zu sorgen.

Eine Verbindung zwischen einem Querrohr und einem Verbindungsteil in Form eines Sitzseitenteils ist beispielsweise in DE 10 2015 206 461 A1 beschrieben, wonach das Querrohr in eine Bohrung des Sitzseitenteils eingesteckt wird. Für eine axiale Festlegung des Querrohrs in der Bohrung wird am Querrohr insbesondere eine innere Wulst ausgebildet. Die innere Wulst wird hierbei in einem vorab durchgeführten Umformvorgang in das Querrohr eingebracht, so dass sich ein Außenradius des Querrohres ergibt, der größer ist als ein Innenradius der Bohrung. Dadurch wird bewirkt, dass das Querrohr nicht tiefer in die Bohrung eingesteckt werden kann. Eine axiale Festlegung in der anderen Richtung wird dadurch erreicht, dass nach dem Einstecken des Querrohres in die Bohrung ein Endbereich des Querrohres derartig radial nach außen umgeformt wird, dass das Querrohr nicht mehr aus der Bohrung entnommen werden kann, da der Endbereich dann einen Radius aufweist, der ebenfalls größer ist als der Innenradius der Bohrung.

Nachteilig hierbei ist, dass insbesondere im Crashfall auf die innere Wulst sehr hohe Verformungs- und Verspannungs-Kräfte wirken, wodurch eine dauerhafte und zuverlässige Verbindung zwischen dem Querrohr und dem Verbindungsteil, hier dem Sitzseitenteil, nicht gewährleistet werden kann. Zudem ist die Montage sehr aufwändig und durch das Ausbilden der inneren Wulst ist ein entsprechender Materialüberschuss für das Querrohr einzuplanen.

Eine weitere Verbindung eines Querrohres mit einem Verbindungsteil ist in der gattungsfremden EP 2 446 980 B1 gezeigt, die beschreibt, ein Gerüstrohr an einem als Grundplatte ausgeführten Verbindungsteil zu fixieren. Demnach ist vorgesehen, in dem Querrohr einen Doppelfalz mit aneinanderliegenden Falzlagen auszubilden, so dass sich ein Außenradius des Querrohres vergrößert. Bei Einstecken des Querrohres in eine Bohrung in der Grundplatte gelangt ab einer gewissen Einstecktiefe der Doppelfalz an die Grundplatte und verhindert ein tieferes Einstecken, da der Innenradius der Bohrung kleiner ist als der Außenradius des Doppelfalzes. In diesem Zustand wird ein Endbereich des eingesteckten Querrohres radial nach außen umgeformt und an die Grundplatte angelegt, so dass die Grundplatte zwischen dem umgeformten Endbereich und dem Doppelfalz quasi eingeklemmt wird.

Nachteilig ist auch hierbei, dass der Doppelfalz im Belastungfall hohen Verformungs- und Verspannungs-Kräften ausgesetzt ist, die unter Umständen eine Verformung verursachen, so dass eine Verbindung zur Grundplatte nicht dauerhaft sichergestellt werden kann. Zudem ist zum Ausbilden des Doppelfalzes ein Materialüberschuss am Querrohr einzuplanen. Auch die Herstellung der Verbindung zwischen beiden Bauteilen ist aufwändig.

DE 10 2013 009 847 A1 zeigt eine Verstellanordnung für eine Verstelleinrichtung eines Fahrzeugsitzes zum Verstellen einer Fahrzeugsitz-Komponente mit einem Querrohr und zumindest einem mit dem Querrohr verdrehfest verbundenen Verbindungsteil, das als Flansch ausgeführt ist, wobei bei einer Verdrehung des Querrohres eine Verstellung der Fahrzeugsitz-Komponente bewirkt werden kann, wobei das Querrohr zur verdrehfesten Befestigung mit dem Verbindungsteil in eine Bohrung im Verbindungsteil eingesteckt ist. Zum Ausbilden der verdrehfesten Verbindung werden in einem Umformvorgang ein Kragen und eine Endscheibe als umgeformter Endbereich hergestellt zwischen denen der Flansch eingeklemmt wird.

EP 0 143 062 zeigt weiterhin ein Herstellungsverfahren, in dem zunächst ein Querrohr mit einem Außenradius und mit einem umformbaren Endbereich sowie ein Verbindungsteil bzw. eine Platte oder ein Stutzen mit einer Bohrung, die einen Innenradius aufweist, wobei der Innenradius der Bohrung geringer ist als der Außenradius des Querrohres, und mit einer um einen Winkel abgeschrägten Verbindungsteil-Anlagefläche, bereitgestellt werden. Weiterhin wird das Querrohr entlang einer Einsteckrichtung in die Bohrung in dem Verbindungsteil unter Verformung einer Oberfläche des Querrohres derartig eingesteckt, dass sich aufgrund des Unterschiedes in den Radien auf der Oberfläche des Querrohres eine Querrohr-Anlagefläche ausbildet, die gegensätzlich zu der Verbindungsteil-Anlagefläche abgeschrägt ist. Durch dieses Einstecken des Querrohres in die Bohrung unter Krafteinwirkung wird eine Verbindung zwischen beiden Bauteilen ausgebildet.

Es ist Aufgabe der Erfindung, eine Verstellanordnung für eine Verstelleinrichtung eines Fahrzeugsitzes bereitzustellen, die auch unter Belastung sicher und zuverlässig eingesetzt und die zudem mit wenig Aufwand und wenig Kosten ausgebildet werden kann. Zudem ist Aufgabe der Erfindung, ein Verfahren zur Herstellung einer derartigen Verstellanordnung anzugeben.

Diese Aufgabe wird durch eine Verstellanordnung nach Anspruch 1 sowie ein Verfahren nach Anspruch 9 gelöst. Bevorzugte Weiterbildungen sind in den Unteransprüchen angegeben.

Erfindungsgemäß ist demnach vorgesehen, an einem Verbindungsteil einer Verstellanordnung, beispielsweise einem Lenker oder einem Flansch, im Bereich einer Bohrung, in die ein Querrohr der Verstellanordnung eingesteckt ist, eine um einen bestimmten Winkel abgeschrägte Verbindungsteil-Anlagefläche auszubilden, an der eine gegensätzlich abgeschrägte Querrohr-Anlagefläche des Querrohres anliegt, wobei dadurch eine axiale Bewegung des Querrohres in der Bohrung eingeschränkt wird. Zudem ist ein Endbereich des Querrohres auf einer Verbindungsteil-Rückseite des Verbindungsteiles derartig radial nach außen umgeformt, dass das Verbindungsteil zwischen der an der Verbindungsteil-Anlagefläche anliegenden Querrohr-Anlagefläche und dem nach außen umgeformten Endbereich eingeklemmt ist, so dass das Querrohr mit dem Verbindungsteil vorzugsweise verdrehfest verbunden ist.

Dadurch wird bereits der Vorteil erreicht, dass die Verbindung zwischen dem Querrohr und dem Verbindungsteil nicht durch eine umgeformte Wulst ausgebildet wird. Durch das Zusammenwirken der Anlageflächen können im Gegensatz zu einer Wulst oder einem Doppelfalz höhere Kräfte abgefangen werden, so dass eine sichere und zuverlässige Verbindung auch bei hohen Belastungen gewährleistet werden kann. Zudem ist zum Ausbilden der Verbindung lediglich zusätzliches Material zum Umformen des Endbereiches einzuplanen. Dadurch können Materialkosten gespart werden und der Montageaufwand wird verringert, da neben dem Verformen des Endbereiches kein zusätzlicher Umformvorgang nötig ist.

Gemäß einer bevorzugten Weiterbildung ist vorgesehen, dass an dem Verbindungsteil im Bereich der Bohrung mindestens eine Einbuchtung angeordnet ist, der eine Ausbuchtung am Querrohr derartig gegenübersteht, dass ein Verdrehen zwischen dem Querrohr und dem Verbindungsteil verhindert ist. D. h. die Ausbuchtung am Querrohr befindet sich in der Einbuchtung im Bereich der Bohrung und blockiert somit eine Drehung des Querrohres in der Bohrung. Vorteilhafterweise wird dadurch eine Verdrehfestigkeit verbessert, da diese Maßnahme die Klemmwirkung, die bereits für eine gewisse Verdrehfestigkeit sorgen kann, unterstützt.

Gemäß einer vorteilhaften Weiterbildung ist vorgesehen, dass vier Einbuchtungen vorgesehen sind, die 90° versetzt zueinander im Bereich der Bohrung angeordnet sind. Dadurch kann die Verdrehfestigkeit auch bei sehr hohen Belastungen sichergestellt werden.

Vorzugsweise ist weiterhin vorgesehen, dass die Ausbuchtungen am Querrohr durch zumindest teilweise Verformung einer Oberfläche des Querrohres im Bereich der Ausbuchtungen und/oder durch zumindest teilweise Verformung einer Oberfläche des Querrohres im Bereich neben den Ausbuchtungen ausbildbar sind.

Dadurch kann vorteilhafterweise erreicht werden, dass die Ausbuchtungen während eines Verbindungsvorganges ausgebildet werden können, bei dem das Querrohr in die Bohrung am Verbindungsteil eingesteckt wird. Dadurch, dass ein Außenradius des Querrohres im ursprünglichen Zustand vor dem Einstecken zumindest bereichsweise größer ist als ein Innenradius der Bohrung, wird die Oberfläche des Querrohres beim Einstecken unter einer Krafteinwirkung an das Profil der Bohrung angepasst. Da die Bohrung eine Einbuchtung aufweist, wird die Oberfläche des Querrohres beim Verbindungsvorgang also derartig verformt, dass zumindest eine zur Einbuchtung gegensätzlich geformte Ausbuchtung am Querprofil ausgebildet wird. Dies erfolgt entweder dadurch, dass in gewissen Bereichen der Außenradius des Querrohres verringert wird und dadurch eine Ausbuchtung dazwischen bleibt oder aber dadurch, dass das Querrohr auch im Bereich der Ausbuchtung selbst zumindest zu einem geringen Teil verformt wird.

Dadurch kann vorteilhafterweise erreicht werden, dass zum Ausbilden einer Verdrehfestigkeit vorab keine zusätzlichen Ausbuchtungen oder ähnliche Elemente am Querrohr herzustellen sind und somit eine zusätzliche Umformung entfallen kann. Dadurch kann der Herstellungsaufwand minimiert werden, da lediglich ein Querrohr bereitzustellen ist, das vorzugsweise eine geringere Härte aufweist als das Verbindungsteil bzw. der Bereich der Bohrung am Verbindungsteil, so dass sich das Querrohr dem Profil der Bohrung anpassen kann, ohne die Bohrung selbst zu beschädigen.

Gemäß einer vorteilhaften Weiterbildung ist weiterhin vorgesehen, dass analog zu den Ausbuchtungen am Querrohr auch die abgeschrägte Querrohr-Anlagefläche durch eine Verformung der Oberfläche des Querrohres ausbildbar ist. D.h. auch hier kann die Querrohr-Anlagefläche auch erst während des Verbindungsvorganges ausgebildet werden, indem aufgrund der unterschiedlichen Radien der Bohrung und des Querrohres eine Verformung der Oberfläche des Querrohres durch die Verbindungsteil-Anlagefläche erfolgt. Durch das Einstecken des Querrohres in die Bohrung unter Krafteinwirkung wird demnach erreicht, dass eine gegensätzlich abgeschrägte Querrohr-Anlagefläche ausgebildet wird, so dass die erfindungsgemäße Klemmwirkung ohne großen Montageaufwand und mit nur wenig Montageschritten und ohne vorherige Umformung des Querrohres ausgebildet werden kann.

Gemäß einer vorteilhaften Weiterbildung ist vorgesehen, dass die abgeschrägte Verbindungsteil-Anlagefläche am Verbindungsteil um einen Winkel von zwischen 50° und 70°, insbesondere 60°, abgeschrägt ist. Dadurch kann eine besonders wirkungsvolle Kraftübertragung vom Querrohr in das Verbindungsteil gewährleistet werden. Gleichzeitig ist beim Verbindungsvorgang nur eine geringe Krafteinwirkung zur Verformung des Querrohres, durch die die Querrohr-Anlagefläche ausgebildet wird, nötig.

Gemäß einer bevorzugten Weiterbildung ist weiterhin vorgesehen, dass der umgeformte Endbereich zum Ausbilden der Klemmwirkung an einer Verbindungsteil-Rückseite des Verbindungsteils anliegt, so dass keine zusätzlichen Elemente erforderlich sind, die für die Klemmwirkung sorgen.

Vorzugsweise ist die Verstellanordnung hierbei Teil einer Verstelleinrichtung für einen Fahrzeugsitz, beispielsweise einer Höhenverstelleinrichtung des Fahrzeugsitzes oder einer Neigungsverstellung einer Rückenlehne. Gemäß einer bevorzugten Ausbildung ist das Querrohr der erfindungsgemäßen Verstellanordnung hierbei das vordere Querrohr einer Höhenverstelleinrichtung, wobei die Verstellanordnung in dem Fall für ein Anheben und Absenken des Sitzteils im vorderen Bereich sorgt und als Verbindungsteile demnach die vorderen Lenker der Höhenverstelleinrichtung dienen. Grundsätzlich kann das Querrohr entsprechend angepasst aber auch das hintere Querrohr der Höhenverstelleinrichtung sein, das dementsprechend hintere Lenker als Verbindungsteile aufweist, über die eine Betätigung einer Betätigungsvorrichtung, z.B. über ein Zahnkranz, übertragen wird.

Zum Herstellen einer derartigen Verstellanordnung ist somit erfindungsgemäß vorgesehen, zunächst ein Querrohr mit einem Außenradius und mit einem umformbaren Endbereich sowie ein Verbindungsteil mit einer Bohrung, die einen Innenradius aufweist, der geringer ist als der Außenradius des Querrohres, und mit einer um einen Winkel abgeschrägten Verbindungsteil-Anlagefläche bereitzustellen.

Anschließend wird das Querrohr entlang einer Einsteckrichtung in die Bohrung in dem Verbindungsteil unter Verformung der Oberfläche des Querrohres derartig eingesteckt, dass sich aufgrund des Unterschiedes in den Radien auf der Oberfläche des Querrohres eine Querrohr-Anlagefläche ausbildet, die gegensätzlich zu der Verbindungsteil-Anlagefläche abgeschrägt ist. Das Einstecken erfolgt, bis zumindest der Endbereich aus der Bohrung an einer Verbindungsteil-Rückseite herausragt.

Anschließend ist ein Umformen des Endbereiches des Querrohres derartig vorgesehen, dass das Verbindungsteil im Bereich der Bohrung zwischen der Querrohr-Anlagefläche und dem umgeformten Endbereich eingeklemmt wird, so dass das Querrohr vorzugsweise verdrehfest mit dem Verbindungsteil verbunden wird.

Somit kann in einfacher Weise eine sichere und zuverlässige Verbindung ausgebildet werden, wobei die relevanten Umformvorgänge direkt während der Verbindung ausgeführt werden können, ohne dass dabei eine Kraftübertragung über eine Wulst oder einen Falz vorliegt.

Dadurch, dass das Umformen direkt über die Bohrung erfolgt, in der das Querrohr auch tatsächlich befestigt ist, können Klappergeräusche beim Einstellen der Sitzhöhe oder der Sitzneigung vermieden werden, da eine Umformung nur in tatsächlich benötigtem Maße erfolgt. Durch die abgeschrägten Anlageflächen kann eine unerwünschte Geräuschunterdrückung also vorteilhafterweise unterstützt werden.

Die Erfindung wird im Folgenden anhand von einigen Ausführungsbeispielen näher erläutert. Es zeigen:
- Fig. 1: eine schematische Ansicht eines Fahrzeugsitzes;
- Fig. 2a, 2b: Detailansichten der Verbindung zwischen einem vorderen Querrohr und einem vorderen Lenker;
- Fig. 3: eine Schnittansicht des vorderen Lenkers im Bereich einer Bohrung;
- Fig. 4a: eine perspektivische Ansicht des vorderen Lenkers; und
- Fig. 4b: eine Schnittansicht der Bohrung.

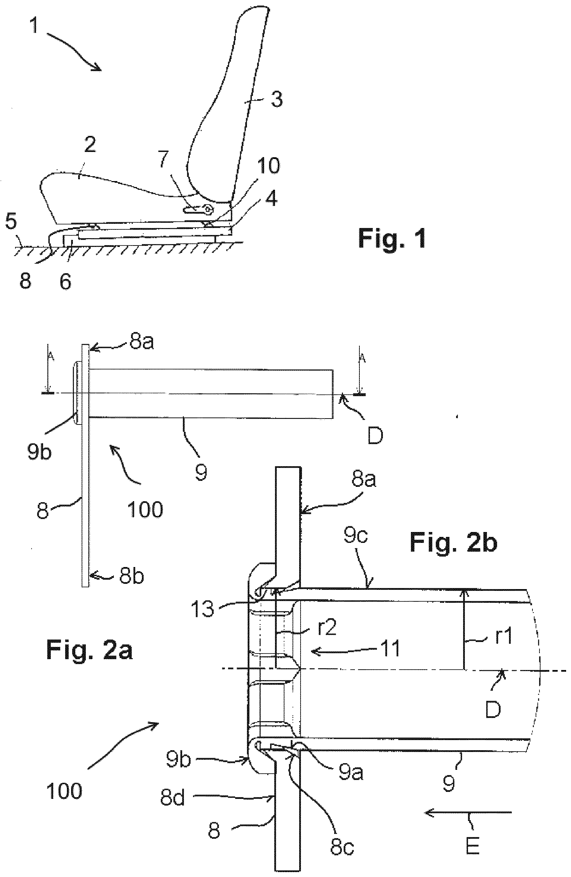

Gemäß Fig. 1 ist ein Fahrzeugsitz 1 dargestellt, der ein Sitzteil 2 und eine Rückenlehne 3 aufweist. Der Fahrzeugsitz 1 ist über Oberschienen 4 längsverstellbar am Fahrzeugboden 5 gelagert, wobei die Oberschienen 4 dazu in Unterschienen 6 verschiebbar aufgenommen sind. Darüber hinaus ist der Fahrzeugsitz 1 gemäß diesem Ausführungsbeispiel mit einer Höhenverstelleinrichtung ausgestattet. Zur Höhenverstellung des Kraftfahrzeugsitzes 1 ist an einer Sitzseite eine nicht dargestellte Höhenverstellpumpe vorgesehen, die über einen Bedienhebel 7 betätigt wird. Die Höhenverstellpumpe weist ein Ritzel auf, welches in bekannter Weise mit einem Zahnsegment an einem hinteren Lenker 10, der hier als Verbindungsteil dient, kämmt, wobei der hintere Lenker 10 an einem oberen Ende mit einem nicht dargestellten hinteren Querrohr verdrehfest verbunden ist. Ein weiterer hinterer Lenker 10 ist in identischer Weise an dem anderen Ende des hinteren Querrohrs verdrehfest aufgenommen.

Durch eine entsprechende Pumpbewegung mit dem Bedienhebel 7 beaufschlagt das Ritzel der Höhenverstellpumpe das Zahnsegment des einen hinteren Lenkers 10, so dass dieser hintere Lenker 10 in die eine oder andere Richtung unter Verdrehung des hinteren Querrohres verschwenkt. Diese Schwenkbewegung wird über das hintere Querrohr auch auf den anderen hinteren Lenker 10 übertragen. Eine durch die Höhenverstellpumpe induzierte Schwenkbewegung wirkt somit gleichzeitig auf beide hintere Lenker 10, wodurch die Höhe des Sitzteils 2 gegenüber dem Fahrzeugboden 5 verstellt werden kann. Diese Ausbildung der Höhenverstelleinrichtung entspricht dem Stand der Technik, so dass es dazu keiner weiteren Erläuterungen bedarf.

Ergänzend sind gemäß Fig. 1 zwei vordere Lenker 8 als Verbindungsteile vorgesehen, die in entsprechender Weise über ein vorderes Querrohr 9 miteinander verdrehfest verbunden sind und durch eine Lagerung an den Oberschienen 4 und dem Sitzteilrahmen des Sitzteils 2 bei einer Betätigung des Bedienhebels 7 ebenfalls verschwenken, so dass der Fahrzeugsitz 1 insgesamt nach oben oder unten verstellt wird. Eine Detailansicht dazu ist insbesondere in den Figuren 2a und 2b dargestellt, die den vorderen Lenker 8 mit dem vorderen Querrohr 9 zeigen. Über das vordere Querrohr 9 werden die oberen Enden 8a der vorderen Lenker 8 jeweils in beliebiger Weise an einem nicht dargestellten Sitzteilrahmen des Sitzteils 2 verschwenkbar um eine Drehachse D gelagert. Über ein unteres Ende 8b der vorderen Lenker 8 sind diese weiterhin jeweils an der Oberschiene 4 verschwenkbar gelagert.

Um eine verdrehfeste Verbindung zwischen dem vorderen Querrohr 9 und den beiden vorderen Lenkern 8 auszubilden und dadurch eine Verstellanordnung 100 bereitzustellen, die Teil der jeweiligen Verstelleinrichtung ist, ist das vordere Querrohr 9, das einen Außenradius r1 aufweist, durch eine Bohrung 11 im oberen Ende 8a des vorderen Lenkers 8, die einen Innenradius r2 aufweist, eingesteckt, wobei der Außenradius r1 größer ist als der Innenradius r2. Beispielhaft wird dies im Folgenden für einen der vorderen Lenker 8 näher erläutert:
Eine axiale Beweglichkeit des vorderen Querrohres 9 gegen den vorderen Lenker 8 entlang der Drehachse D ist demnach dadurch begrenzt, dass das vordere Querrohr 9 im Bereich der Bohrung 11 mit einer abgeschrägten Querrohr-Anlagefläche 9a an einer Verbindungsteil-Anlagefläche 8c am vorderen Lenker 8 zumindest teilweise anliegt und sich darauf abstützt. Dadurch wird die axiale Bewegung des vorderen Querrohres 9 entlang einer Einsteckrichtung E begrenzt, da die Verbindungsteil-Anlagefläche 8c ein weiteres Einstecken entlang der Einsteckrichtung E zumindest ohne das Ausüben einer hohen Kraft blockiert.

Um auch eine axiale Bewegung des vorderen Querrohres 9 entgegen der Einsteckrichtung E zu verhindern, ist das vordere Querrohr 9 in einem Endbereich 9b radial nach außen umlaufend auf eine Lenker-Rückseite 8d (Verbindungsteil-Rückseite) umgebogen. Somit wird das vordere Querrohr 9 durch das Zusammenwirken der abgeschrägten Anlageflächen 9a, 8c sowie dem umgebogenen Endbereich 9b des vorderen Querrohres 9 am vorderen Lenker 8 gehalten bzw. der vordere Lenker 8 dadurch vom Querrohr 9 eingeklemmt. Aufgrund des zumindest teilweise umlaufenden Anliegens der beiden Anlageflächen 9a, 8c wird auch eine radiale Bewegung senkrecht zur Drehachse D verhindert.

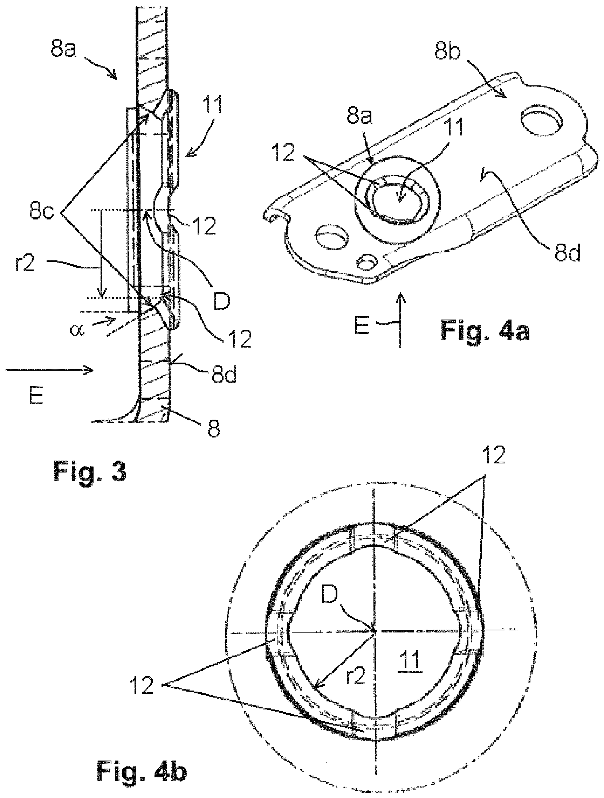

Eine Verdrehfestigkeit des vorderen Querrohres 9 gegenüber dem vorderen Lenker 8 kann nur bis zu einem gewissen Grad durch das oben beschriebene Einklemmen ausgebildet werden. Um dies zu unterstützen, sind gemäß den Figuren Fig. 3, 4a und 4b weiterhin vier im Bereich der Bohrung 11 eingebrachte Einbuchtungen 12, die um 90° versetzt zueinander angeordnet sind, vorgesehen. In diesen Einbuchtungen 12 liegt das vordere Querrohr 9 mit Ausbuchtungen 13, die andeutungsweise in Fig. 2b zu erkennen sind, an, wobei die Ausbuchtungen 13 im vorderen Querrohr 9 in einem Verbindungsvorgang des vorderen Querrohres 9 mit dem vorderen Lenker 8 ausgebildet werden. Das vordere Querrohr 9 liegt also im Bereich der Bohrung 11 idealerweise vollständig umlaufend an dem vorderen Lenker 8 an, indem die Querrohr-Anlagefläche 9a an der Verbindungsteil-Anlagefläche 8c flächig und dazwischen um 90° versetzt die vier Ausbuchtungen 13 am vorderen Querrohr 9 an den vier Einbuchtungen 12 der Bohrung 11 anliegen. Dadurch kann letztlich das vordere Querrohr 9 nicht mehr gegen den vorderen Lenker 8 verdreht werden. Somit kann eine Bewegungseinschränkung des vorderen Querrohres 9 gegenüber dem vorderen Lenker 8 in alle Richtungen ausgebildet werden.

In einem erfindungsgemäßen Verbindungsvorgang zum Ausbilden der Verbindung zwischen dem vorderen Querrohr 9 und dem jeweiligen vorderen Lenker 8, d.h. zum Ausbilden der Verstellanordnung 100, können beispielsweise die folgenden Schritte vorgesehen sein:
In einem ersten Schritt St1 werden ein vorzugsweise zylindrisches vorderes Querrohr 9 mit einem Außenradius r1 und mit einem umformbaren Endbereich 9b sowie der vordere Lenker 8 mit einer Bohrung 11, die einen Innenradius r2 aufweist, der geringer ist als der Außenradius r1 des vorderen Querrohres 9, und mit einer zumindest teilweise umlaufenden abgeschrägten Verbindungsteil-Anlagefläche 8c sowie Einbuchtungen 12 - wie beispielhaft in Fig. 3 dargestellt - bereitgestellt. Die Verbindungsteil-Anlagefläche 8c ist beispielsweise um einen Winkel α von zwischen 50° und 70°, insbesondere von ca. 60° gegenüber der Horizontalen abgeschrägt.

In einem zweiten Schritt St2 wird das vordere Querrohr 9 in die Bohrung 11 des vorderen Lenkers 8 eingesteckt, bis der Endbereich 9b durch die Bohrung 11 hindurchragt. Dies erfolgt aufgrund der Unterschiede in den Radien r1, r2 durch eine Krafteinwirkung sowie unter Verformung des vorderen Querrohres 9 zumindest in dem Bereich einer Oberfläche 9c des vorderen Querrohres 9, in dem die Oberfläche 9c gegen die Bohrung 11 gelangt, so dass sich die Oberfläche 9c des vorderen Querrohrs 9 an das Profil der Bohrung 11 zumindest teilweise anpasst.

Demnach werden an der Oberfläche 9c des vorderen Querohres 9 die abgeschrägten Querrohr-Anlageflächen 9a ausgebildet, die gegensätzlich abgeschrägt zu den um den Winkel α angeschrägten Verbindungsteil-Anlageflächen 8c ausgebildet sind. Im Bereich der Einbuchtungen 12 in der Bohrung 11 findet eine weniger starke Verformung der Oberfläche 9c des vorderen Querrohres 9 statt, da der Innenradius r2 der Bohrung 11 im Bereich der Einbuchtungen 12 weniger stark von dem Außenradius r1 des vorderen Querrohres 9 abweicht. Unter Umständen bleibt die Oberfläche 9c des vorderen Querrohres 9 in diesem Bereich je nach Tiefe der Einbuchtungen 12 auch unbeeinflusst. Dadurch wird gewährleistet, dass das vordere Querrohr 9 nicht in der Bohrung 11 und somit gegen den vorderen Lenker 8 verdreht werden kann.

Das Einstecken des vorderen Querrohres 9 erfolgt beispielsweise bis ein gewisser Kraftaufwand nötig ist, um das vordere Querrohr 9 tiefer einzustecken und somit weiter zu verformen. Weiterhin kann das Einstecken dadurch begrenzt sein, dass ein genügend großer Teil des vorderen Querrohres 9 durch die Bohrung 11 ragt und der Endbereich 9b des vorderen Querrohres 9 somit in einem dritten Schritt St3 derartig radial nach außen umgeformt werden kann, dass sich dieses an die Lenker-Rückseite 8d anlegen lässt, um den vorderen Lenker 8 quasi zwischen dem umgeformten Endbereich 9b und der Rohr-Verbindungsfläche 9a einzuklemmen.

Damit ist der Verbindungsvorgang abgeschlossen und das vordere Querrohr 9 ist verdrehfest am vorderen Lenker 8 aufgenommen. Diese Art der Verbindung mit einem Querrohr kann für alle Lenker 8, 10, die in Fig. 1 dargestellt sind, vorgesehen sein also beispielsweise auch für die hinteren Lenker 8 und das nicht dargestellte hintere Querrohr. Ergänzend kann auch in einer Neigungsverstelleinrichtung der Rückenlehne 3 eine derartige Verbindung zwischen einem Querrohr und einem Lenker oder einem Beschlag oder einem Flasch vorgesehen sein, die in identischer Weise erfolgen kann und mit der ebenfalls eine Verdrehfestigkeit und ein sicheres Halten in dieser Neigungsverstelleinrichtung erreicht werden kann.

### Bezugszeichenliste (Teil der Beschreibung)

- 1: Fahrzeugsitz
- 2: Sitzteil
- 3: Rückenlehne
- 4: Oberschiene
- 5: Fahrzeugboden
- 6: Unterschiene
- 7: Bedienhebel
- 8: vorderer Lenker/Verbindungsteil
- 8a: oberes Ende des vorderen Lenkers 8
- 8b: unteres Ende des vorderen Lenkers 8
- 8c: Verbindungsteil-Anlagefläche
- 8d: Lenker-Rückseite/Verbindungsteil-Rückseite
- 9: vorderes Querrohr
- 9a: Querrohr-Anlagefläche
- 9b: Endbereich
- 9c: Oberfläche des vorderen Querrohres 9
- 10: hinterer Lenker/Verbindungsteil
- 11: Bohrung
- 12: Einbuchtungen
- 13: Ausbuchtungen
- 100: Verstellanordnung
- D: Drehachse
- E: Einsteckrichtung
- r1: Außenradius des vorderen Querrohres
- r2: Innenradius der Bohrung 11

## Patentansprüche

1. Verstellanordnung (100) für eine Verstelleinrichtung eines Fahrzeugsitzes (1) zum Verstellen einer Fahrzeugsitz-Komponente (2, 3), aufweisend ein Querrohr (9) und zumindest ein mit dem Querrohr (9) verdrehfest verbundenes Verbindungsteil (8, 10), wobei bei einer Verdrehung des Querrohres (9) eine Verstellung der Fahrzeugsitz-Komponente (2, 3) bewirkt werden kann, wobei das Querrohr (9) zur verdrehfesten Befestigung mit dem Verbindungsteil (8, 10) in eine Bohrung (11) im Verbindungsteil (8, 10) eingesteckt ist,
**dadurch gekennzeichnet, dass**
an dem Verbindungsteil (8) im Bereich der Bohrung (11) eine um einen Winkel (α) abgeschrägte Verbindungsteil-Anlagefläche (8c) ausgebildet ist, an der eine gegensätzlich abgeschrägte Querrohr-Anlagefläche (9a) des Querrohres (9) anliegt zum Einschränken einer axialen Bewegung des Querrohres (9), und
ein Endbereich (9b) des Querrohres (9) auf einer Verbindungsteil-Rückseite (8d) des Verbindungsteiles (8) derartig radial nach außen umgeformt ist, dass das Verbindungsteil (8) zwischen der an der abgeschrägten Verbindungsteil-Anlagefläche (8c) anliegenden gegensätzlich abgeschrägten Querrohr-Anlagefläche (9a) und dem nach außen umgeformten Endbereich (9b) eingeklemmt ist.

2. Verstellanordnung (100) nach Anspruch 1, **dadurch gekennzeichnet, dass** an dem Verbindungsteil (8) im Bereich der Bohrung (11) mindestens eine Einbuchtung (12) angeordnet ist, der eine Ausbuchtung (13) am Querrohr (9) derartig gegenübersteht, dass ein Verdrehen zwischen dem Querrohr (9) und dem Verbindungsteil (8) verhindert ist.

3. Verstellanordnung (100) nach Anspruch 2, **dadurch gekennzeichnet, dass** vier Einbuchtungen (12) vorgesehen sind, die 90° versetzt zueinander im Bereich der Bohrung (11) angeordnet sind.

4. Verstellanordnung (100) nach Anspruch 2 oder 3, **dadurch gekennzeichnet, dass** die Ausbuchtungen (13) am Querrohr (9) durch zumindest teilweise Verformung einer Oberfläche (9c) des Querrohres (9) im Bereich der Ausbuchtungen (13) und/oder durch zumindest teilweise Verformung einer Oberfläche (9c) des Querrohres (9) im Bereich neben den Ausbuchtungen (13) ausbildbar sind.

5. Verstellanordnung (100) nach einem der vorhergehenden Ansprüche, **dadurch gekennzeichnet, dass** die Querrohr-Anlagefläche (9a) durch eine Verformung einer Oberfläche (9c) des Querrohres (9) ausbildbar ist.

6. Verstellanordnung (100) nach Anspruch 4 oder 5, **dadurch gekennzeichnet, dass** die Ausbuchtungen (13) und/oder die Querrohr-Anlagefläche (9a) am Querrohr (9) während eines Verbindungsvorganges dadurch ausbildbar sind, dass das Querrohr (9) einen Außenradius (r1) aufweist, der zumindest bereichsweise größer ist als ein Innenradius (r2) der Bohrung (11), so dass sich die Oberfläche (9c) des Querrohres (9) beim Verbindungsvorgang durch ein Einstecken des Querrohres (9) in die Bohrung (11) derartig verformt, dass gegensätzlich zu den Einbuchtungen (12) die Ausbuchtungen (13) und/oder gegensätzlich zu der Verbindungs-Anlagefläche (8c) die Querrohr-Anlagefläche (9a) ausgebildet wird.

7. Verstellanordnung (100) nach einem der vorhergehenden Ansprüche, **dadurch gekennzeichnet, dass** die abgeschrägte Verbindungsteil-Anlagefläche (8c) am Verbindungsteil (8) um einen Winkel (α) von zwischen 50° und 70°, vorzugsweise 60° abgeschrägt ist.

8. Verstellanordnung (100) nach einem der vorhergehenden Ansprüche, **dadurch gekennzeichnet, dass** der umgeformte Endbereich (9b) an einer Verbindungsteil-Rückseite (8d) des Verbindungsteils (8) anliegt.

9. Verfahren zum Herstellen einer Verstellanordnung (100), insbesondere einer Verstellanordnung (100) nach einem der vorhergehenden Ansprüche, mit mindestens den folgenden Schritten:
- Bereitstellen eines Querrohrs (9) mit einem Außenradius (r1) und mit einem umformbaren Endbereich (9b) sowie eines Verbindungsteils (8) mit einer Bohrung (11), die einen Innenradius (r2) aufweist, der geringer ist als der Außenradius (r1) des Querrohres (9), und mit einer um einen Winkel (α) abgeschrägten Verbindungsteil-Anlagefläche (8c) (St1);
- Einstecken des Querrohres (9) entlang einer Einsteckrichtung (E) in die Bohrung (11) in dem Verbindungsteil (8) unter Verformung einer Oberfläche (9c) des Querrohres (3) derartig, dass sich aufgrund des Unterschiedes in den Radien (r1, r2) auf der Oberfläche (9c) des Querrohres (9) eine Querrohr-Anlagefläche (9a) ausbildet, die gegensätzlich zu der Verbindungsteil-Anlagefläche (8c) abgeschrägt ist,
**dadurch gekennzeichnet, dass**
das Querrohr (9) zumindest bis dann in die Bohrung (11) eingesteckt wird, bis der Endbereich (9b) aus der Bohrung (11) an einer Verbindungsteil-Rückseite (8d) herausragt (St2); und
- Umformen des Endbereiches (9b) des Querrohres (9) derartig, dass das Verbindungsteil (8) zwischen der Querrohr-Anlagefläche (9a) und dem umgeformten Endbereich (9b) eingeklemmt wird, so dass das Querrohr (9) verdrehfest mit dem Verbindungsteil (8) verbunden wird (St3).

10. Verfahren nach Anspruch 9, **dadurch gekennzeichnet, dass** an dem bereitgestellten Verbindungsteil (8) im Bereich der Bohrung (11) weiterhin mindestens eine Einbuchtung (12) angeordnet ist, durch die beim Einstecken des Querrohres (9) in die Bohrung (11) am Querrohr (9) durch zumindest teilweise Verformung der Oberfläche (9c) des Querrohres (9) Ausbuchtungen (13) ausbildet werden, die zumindest bereichsweise gegensätzlich zu den Einbuchtungen (12) ausgeführt sind, wobei dazu die Oberfläche (9c) im Bereich der Ausbuchtungen (13) und/oder im Bereich neben den Ausbuchtungen (13) verformt wird.

11. Fahrzeugsitz (1) mit einer Verstellanordnung (100) nach einem der Ansprüche 1 bis 8 für eine Verstelleinrichtung, vorzugsweise eine Höhenverstelleinrichtung oder eine Neigungsverstelleinrichtung, hergestellt insbesondere durch ein Verfahren nach Anspruch 9 oder 10.

## Claims

1. Adjustment arrangement (100) for an adjustment device of a vehicle seat (1) for adjusting a vehicle seat component (2, 3), having a transverse pipe (9) and at least one connection portion (8, 10) which is connected to the transverse pipe (9) in a torsion-resistant manner, wherein, when the transverse pipe (9) is twisted, an adjustment of the vehicle seat component (2, 3) can be brought about, wherein the transverse pipe (9) is inserted in a hole (11) in the connection portion (8, 10) for torsion-resistant securing to the connection portion (8, 10),
**characterised in that**
there is formed on the connection portion (8) in the region of the hole (11) a connection portion abutment face (8c) which is chamfered by an angle (α) and which a transverse pipe abutment face (9a) of the transverse pipe (9), which face is chamfered in the opposite direction, abuts in order to limit an axial movement of the transverse pipe (9), and an end region (9b) of the transverse pipe (9) on a connection portion rear-side (8d) of the connection portion (8) is shaped radially outwards in such a manner that the connection portion (8) is clamped between the transverse pipe abutment face (9a) which is chamfered in the opposite direction and which abuts the chamfered connection portion abutment face (8c) and the outwardly shaped end region (9b).

2. Adjustment arrangement (100) according to claim 1, **characterised in that** on the connection portion (8) in the region of the hole (11) there is arranged at least one recess (12) which is opposite a projection (13) on the transverse pipe (9) in such a manner that torsion between the transverse pipe (9) and the connection portion (8) is prevented.

3. Adjustment device (100) according to claim 2, **characterised in that** there are provided four recesses (12) which are arranged offset at 90° with respect to each other in the region of the hole (11).

4. Adjustment device (100) according to claim 2 or 3, **characterised in that** the projections (13) can be formed on the transverse pipe (9) by means of at least partial deformation of a surface (9c) of the transverse pipe (9) in the region of the projections (13) and/or by means of at least partial deformation of a surface (9c) of the transverse pipe (9) in the region beside the projections (13).

5. Adjustment device (100) according to any one of the preceding claims, **characterised in that** the transverse pipe abutment face (9a) can be formed by a deformation of a surface (9c) of the transverse pipe (9).

6. Adjustment device (100) according to claim 4 or 5, **characterised in that** the projections (13) and/or the transverse pipe abutment face (9a) on the transverse pipe (9) can be formed during a connection operation **in that** the transverse pipe (9) has an outer radius (r1) which is at least partially greater than an inner radius (r2) of the hole (11) so that the surface (9c) of the transverse pipe (9) during the connection operation is deformed by inserting the transverse pipe (9) into the hole (11) in such a manner that the projections (13) are formed opposite the recesses (12) and/or the transverse pipe abutment face (9a) is formed opposite the connection abutment face (8c).

7. Adjustment arrangement (100) according to any one of the preceding claims, **characterised in that** the chamfered connection portion abutment face (8c) is chamfered on the connection portion (8) by an angle (α) between 50° and 70°, preferably of 60°.

8. Adjustment arrangement (100) according to any one of the preceding claims, **characterised in that** the shaped end region (9b) abuts a connection portion rear side (8d) of the connection portion (8).

9. Method for producing an adjustment arrangement (100), in particular an adjustment arrangement (100) according to any one of the preceding claims, having at least the following steps:
- providing a transverse pipe (9) with an outer radius (r1) and with a deformable end region (9b) and a connection portion (8) with a hole (11) which has an inner radius (r2) which is smaller than the outer radius (r1) of the transverse pipe (9), and having a connection portion abutment face (8c) (St1) which is chamfered by an angle (α);
- inserting the transverse pipe (9) in an insertion direction (E) into the hole (11) in the connection portion (8) while deforming a surface (9c) of the transverse pipe (3) in such a manner that, as a result of the difference in the radii (r1, r2) on the surface (9c) of the transverse pipe (9), a transverse pipe abutment face (9a) which is chamfered in the opposite direction to the connection portion abutment face (8c) is formed,
**characterised in that**
the transverse pipe (9) is inserted into the hole (11) at least until the end region (9b) protrudes (St2) from the hole (11) at a connection portion rear side (8d); and
- shaping the end region (9b) of the transverse pipe (9) in such a manner that the connection portion (8) is clamped between the transverse pipe abutment face (9a) and the shaped end region (9b) so that the transverse pipe (9) is connected (St3) to the connection portion (8) in a torsion-resistant manner.

10. Method according to claim 9, **characterised in that** there is further arranged in the provided connection portion (8) in the region of the hole (11) at least one recess (12) by means of which, when the transverse pipe (9) is inserted into the hole (11), there are formed on the transverse pipe (9) by means of at least partial deformation of the surface (9c) of the transverse pipe (9) projections (13) which are constructed at least in regions opposite the recesses (12), wherein in addition the surface (9c) in the region of the projections (13) and/or in the region beside the projections (13) is deformed.

11. Vehicle seat (1) having an adjustment arrangement (100) according to any one of claims 1 to 8 for an adjustment device, preferably a height adjustment device or an inclination adjustment device, produced in particular by a method according to claim 9 or claim 10.

## Revendications

1. Agencement de réglage (100) pour un dispositif de réglage d'un siège de véhicule (1) servant à régler un composant de siège de véhicule (2, 3) présentant un tube transversal (9) et au moins une pièce de jonction (8, 10) reliée au tube transversal (9) de façon résistante à la torsion, une rotation du tube transversal (9) pouvant permettre un réglage du composant de siège de véhicule (2, 3), le tube transversal (9) étant inséré dans un alésage (11) dans la pièce de jonction (8, 10) pour la fixation résistante à la torsion à celle-ci (8, 10),
**caractérisé en ce que**
une surface d'appui de pièce de jonction (8c) inclinée selon un angle (α) est formée sur la pièce de jonction (8), dans la zone de l'alésage (11), surface d'appui de pièce de jonction (8c), à laquelle une surface d'appui de tube transversal à inclinaison contraire (9a) du tube transversal (9) est adjacente, et
**en ce qu'**une zone d'extrémité (9b) du tube transversal (9) sur la face arrière de pièce de jonction (8d) de la pièce de jonction (8) est déformée radialement vers l'extérieur de sorte que la pièce de jonction (8) est serrée entre la surface d'appui de tube transversal à inclinaison contraire (9a) adjacente à la surface d'appui de pièce de jonction inclinée (8c) et la zone d'extrémité (9b) déformée vers l'extérieur.

2. Agencement de réglage (100) suivant la revendication 1, **caractérisé en ce que** au moins un renfoncement (12) est disposé sur la pièce de jonction (8) dans la zone de l'alésage (11), renfoncement (12), auquel un renflement (13) sur le tube transversal (9) fait face de sorte à empêcher une torsion entre le tube transversal (9) et la pièce de jonction (8).

3. Agencement de réglage (100) suivant la revendication 2, **caractérisé en ce que** quatre renfoncements (12) sont prévus qui sont disposés décalés de 90° les uns par rapport aux autres dans la zone de l'alésage (11).

4. Agencement de réglage (100) suivant la revendication 2 ou 3, **caractérisé en ce que** les renflements (13) sur le tube transversal (9) peuvent être formés par une déformation au moins partielle d'une surface (9c) du tube transversal (9) dans la zone des renfoncements (13) et/ou par une déformation au moins partielle d'une surface (9c) du tube transversal (9) dans la zone à côté des renflements (13).

5. Agencement de réglage (100) suivant une des revendications précédentes, **caractérisé en ce que** la surface d'appui de tube transversal (9a) peut être formée par une déformation d'une surface (9c) du tube transversal (9).

6. Agencement de réglage (100) suivant la revendication 4 ou 5, **caractérisé en ce que** les renflements (13) et/ou la surface d'appui de tube transversal (9a) sur le tube transversal (9) peuvent être formés pendant un processus de liaison du fait que le tube transversal (9) présente un rayon extérieur (r1) qui est au moins par zones supérieur à un rayon intérieur (r2) de l'alésage (11) de sorte à déformer la surface (9c) du tube transversal (9) lors du processus de liaison du fait de l'insertion du tube transversal (9) dans l'alésage (11) de sorte que les renflements (13) sont formés à l'opposé des renfoncements (12) et/ou que la surface d'appui de tube transversal (9a) est formée à l'opposé de la surface d'appui de pièce de liaison (8c).

7. Agencement de réglage (100) suivant une des revendications précédentes **caractérisé en ce que** la surface d'appui de pièce de jonction inclinée (8c) est inclinée, sur la pièce de jonction (8), d'un angle α compris entre 50° et 70°, de préférence d'un angle de 60°.

8. Agencement de réglage (100) suivant une des revendications précédentes, **caractérisé en ce que** la zone d'extrémité déformée (9b) est adjacente à une face arrière de pièce de jonction (8d) de la pièce de jonction (8).

9. Procédé de fabrication d'un agencement de réglage (100), en particulier d'un agencement de réglage (100) suivant une des revendications précédentes, le procédé comportant au moins les étapes suivantes :
- mise à disposition d'un tube transversal (9) avec un rayon extérieur (r1) et une zone d'extrémité déformable (9b) ainsi que d'une pièce de jonction (8) avec un alésage (11) qui présente un rayon intérieur (r2) qui est inférieur au rayon extérieur (r1) du tube transversal (9) et avec une surface d'appui de pièce de jonction (8c) (St1) inclinée selon un angle (α),
- insertion du tube transversal (9) le long d'une direction d'insertion (E) dans l'alésage (11) dans la pièce de jonction (8) en déformant une surface (9c) du tube transversal (3) de sorte qu'en raison de la différence au niveau des rayons (r1, r2), une surface d'appui de tube transversal (9a) se forme sur la surface (9c) du tube transversal (9), surface d'appui, dont l'inclinaison est contraire à celle de la surface d'appui de pièce de jonction (8c),
**caractérisé en ce que**
le tube transversal (9) est inséré dans l'alésage (11) jusqu'à ce que la zone d'extrémité (9b) dépasse (St2) de l'alésage (11) sur une face arrière de pièce de jonction (8d), et
- déformation de la zone d'extrémité (9b) du tube transversal (9) de sorte que la pièce de jonction (8) est serrée entre la surface d'appui de tube transversal (9a) et la zone d'extrémité déformée (9b) de sorte que le tube transversal (9) est relié à la pièce de jonction (8) de façon résistante à la torsion (St3).

10. Procédé suivant la revendication 9, **caractérisé en ce qu'au** moins un renfoncement (12) est disposé en plus sur la pièce de jonction (8) mise à disposition, dans la zone de l'alésage (11), renfoncement (12), grâce auquel des renflements (13) sont formés sur le tube transversal (9) par déformation au moins partielle de la surface (9c) du tube transversal lors de l'insertion de celui-ci dans l'alésage (11), renflements (13) qui sont formés au moins par zones de façon contraire aux renfoncements(12), la surface (9c) étant, à cet effet, déformée dans la zone des renflements (13) et/ou dans la zone à côté des renflements (13).

11. Siège de véhicule (1) comportant un agencement de réglage (100) suivant une des revendications 1 à 8 pour un dispositif de réglage, de préférence, un dispositif de réglage en hauteur ou un dispositif de réglage d'inclinaison, fabriqué en particulier selon un procédé suivant la revendication 9 ou 10.
